# EUROPÄISCHE PATENTANMELDUNG

(11) **EP 4 491 322 A1**
(43) Veröffentlichungstag der Anmeldung: **15.01.2025**
(21) Anmeldenummer: 23185493.6
(22) Anmeldetag: 14.07.2023
(51) Int. Cl.: B23P 15/24, B21H 3/06, B23K 26/352, B21H 3/04, B23K 26/354, B23K 26/36

(54) **VERFAHREN ZUR BEARBEITUNG EINER WALZBACKE**

(71) Anmelder: SPAX International GmbH & Co. KG, 58256 Ennepetal (DE)
(72) Erfinder: KROESEN, Klaus, 58256 Ennepetal (DE); ROMANKO, Jacek, 58256 Ennepetal (DE)
(74) Vertreter: Schneider, Sascha

(57) **Zusammenfassung**

Die Erfindung betrifft ein Verfahren zur Bearbeitung einer Walzbacke, insbesondere eine Walzbacke zum Walzen eines Gewindes in einen Schraubenrohling, aufweisend eine Walzbackenoberfläche mit einer Vielzahl an Nuten, wobei die Walzbackenoberfläche strukturiert wird.

## Beschreibung

Die Erfindung betrifft ein Verfahren zur Bearbeitung einer Walzbacke, eine Walzbacke bearbeitet mit einem erfindungsgemäßen Verfahren, ein Verfahren zum Walzen eines Gewindes in einen Schraubenrohling sowie eine Schraube mit einem Gewinde, gewalzt mit einem erfindungsgemäßen Verfahren, gemäß den unabhängigen Patentansprüchen.

Im Stand der Technik existieren Verfahren zur Bearbeitung einer Walzbacke, bei denen auf den Walzbacken eine Vielzahl an Querrillen eingebracht wird. Diese Querrillen sollen verhindern, dass beispielsweise eine Schraube beim Abrollen zwischen den Walzbacken rutscht.

Allerdings werden die Abrollflächen der Walzbacken im Bereich dieser Querrillen durch den hohen Anpressdruck und die Abrollbewegung der Schraube stark belastet, so dass die Abrollflächen der Walzbacken sehr schnell verschleißen. Somit wird die Lebensdauer herkömmlicher Walzbacken durch den Verschleiß der Abrollflächen erheblich reduziert.

Außerdem hat sich nachteilig herausgestellt, dass die Querrillen auf dem Schaft der Schraube eine sogenannte "Panzerkettenstruktur" erzeugen, welche zur Querschnittsreduktion des Schraubenschaftes und damit zur Festigkeitsreduktion führt.

Es ist daher die Aufgabe der vorliegenden Erfindung, die Nachteile des Stands der Technik zu beseitigen und insbesondere den Verschleiß der Walzbacken zu verringern und die Lebensdauer der Walzbacken zu erhöhen.

Gelöst wird diese Aufgabe mit dem Gegenstand der unabhängigen Ansprüche. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein.

Die Erfindung betrifft ein Verfahren zur Bearbeitung einer Walzbacke, insbesondere eine Walzbacke zum Walzen eines Gewindes in einen Schraubenrohling, aufweisend eine Walzbackenoberfläche mit einer Vielzahl an Nuten, insbesondere zum Walzen des Gewindes, wobei die Walzbackenoberfläche strukturiert wird.

Die Erfindung betrifft weiterhin eine Walzbacke, bearbeitet mit einem erfindungsgemäßen Verfahren.

Die Erfindung betrifft weiterhin eine Vorrichtung zum Walzen eines Gewindes in einen Schraubenrohling, aufweisend mindestens eine Walzbacke, bearbeitet mit einem erfindungsgemäßen Verfahren.

Die Erfindung betrifft weiterhin ein Verfahren zum Walzen eines Gewindes in einen Schraubenrohling, wobei das Gewinde mit einer Vorrichtung bzw. einem Verfahren gemäß der vorliegenden Erfindung gewalzt wird.

Die Erfindung betrifft weiterhin eine Schraube mit einem Gewinde, wobei das Gewinde mit einem Verfahren gemäß der vorliegenden Erfindung gewalzt wird.

Dadurch, dass die Walzbackenoberfläche strukturiert wird, ist es vorteilhaft möglich, dass die Abrollflächen der Walzbacken auch bei hohem Anpressdruck während der Abrollbewegung eines Werkstücks, insbesondere einer Schraube, relativ gering belastet werden, so dass die Walzbacke weniger Verschleiß unterliegt. Somit kann die Lebensdauer der Walzbacke durch die verschleißfeste Oberfläche der Walzbacke verlängert werden.

Für die weitere Beschreibung der Erfindung wird klargestellt, dass die Nuten in der Walzbackenoberfläche nicht die erzeugte Struktur bilden. Die erzeugte Struktur wird zusätzlich zu den Nuten auf der Walzbackenoberfläche erzeugt, insbesondere auf Bereichen zwischen benachbarten Nuten.

Außerdem wird vorteilhafterweise der Querschnitt des Werkstücks, insbesondere des Schraubenschaftes, gar nicht oder zumindest kaum reduziert, so dass eine höhere Festigkeit als im Stand der Technik vorliegt.

Somit kann weiterhin vorteilhaft die Qualität der erzeugten Werkstücke, insbesondere der Schrauben, verbessert werden und die Standzeit der Walzbacken erhöht werden.

Durch die Strukturierung ist es vorteilhaft vorgesehen, dass eine relativ raue und harte Oberfläche erzielt wird. Insbesondere können Legierungsbestandteile durch die Laserstrahlung verdampfen, so dass beim Aushärten der Bestandteile eine höhere Härte an der Oberfläche erzielt wird.

Der durch die Strukturierung erzielte Mittenrauwert Ra liegt bevorzugt zwischen Ra 3 und Ra 30, insbesondere weisen dünnere Schrauben (Durchmesser von 1,6 mm bis 4,5 mm) einen Mittenrauwert von Ra 3 bis Ra 15 auf und dickere Schrauben (Durchmesser von 4,6 mm bis 16 mm) einen Mittenrauwert von Ra 16 bis Ra 30 auf.

Die erzeugte Struktur auf der Walzbackenoberfläche weist eine Vielzahl an Erhebungen und Vertiefungen auf.

Gemäß einer vorteilhaften Ausbildung der Erfindung ist vorgesehen, dass die Walzbackenoberfläche durch Laserstrahlung strukturiert wird.

Gemäß einer anderen bevorzugten Ausführungsform ist vorgesehen, dass die Walzbackenoberfläche durch spanende Bearbeitung, insbesondere durch einen Fräser und/oder durch Schleifen, strukturiert wird.

Gemäß einer anderen bevorzugten Ausführungsform ist vorgesehen, dass eine lederstrukturähnliche Oberfläche erzeugt wird. Eine lederstrukturähnliche Oberfläche ist dadurch definiert, dass sie eine Vielzahl an unregelmäßigen Erhebungen und Vertiefungen aufweist.

Insbesondere bei der Strukturierung mit einem Laser ist es vorteilhaft vorgesehen, dass eine relativ raue und harte Oberfläche erzielt wird. Insbesondere wird die Oberfläche aufgeschmolzen und dadurch die gewünschte Rauigkeit erzeugt, so dass beispielsweise verhindert wird, dass das Werkstück, insbesondere der Schraubenrohling, rutscht, so dass z.B. das Gewinde sauber geformt werden kann.

Gemäß einer anderen bevorzugten Ausführungsform ist vorgesehen, dass eine Stufenstruktur erzeugt wird. Diese ist insbesondere derart ausgebildet, dass eine Vielzahl an Stufen auf der Walzbackenoberfläche erzeugt wird. Diese können insbesondere quer zu den Erstreckungsrichtungen der Nuten angeordnet sein. Die Nuten sind üblicherweise parallel zueinander angeordnet und erstrecken sich parallel zu einer Haupterstreckungsrichtung.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1 zeigt eine beispielhafte Ausführungsform einer erfindungsgemäßen Vorrichtung,
Figur 2a zeigt eine erste beispielhafte Ausführungsform einer erfindungsgemäßen Walzbacke,
Figur 2b zeigt eine zweite beispielhafte Ausführungsform einer erfindungsgemäßen Walzbacke,
Figur 3 zeigt einen vergrößerten Ausschnitt der Walzbackenoberfläche der Walzbacke aus Figur 2a.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

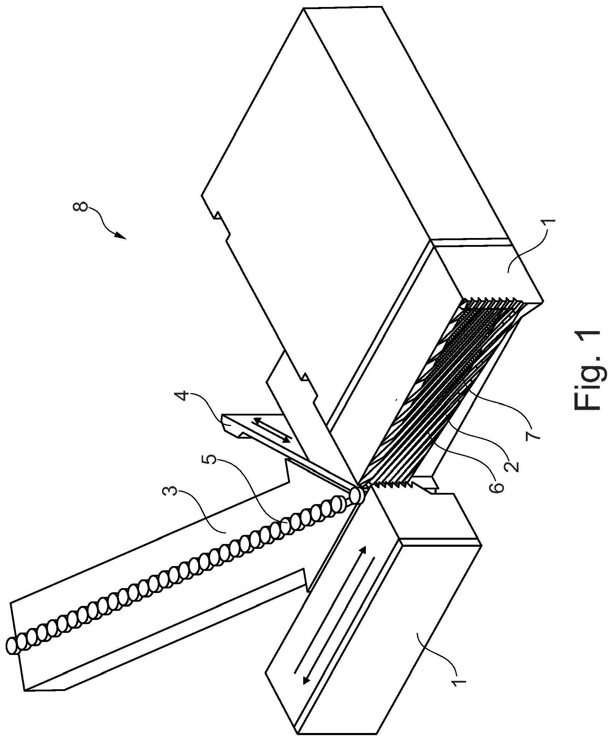

Figur 1 zeigt schematisch eine beispielhafte Ausführungsform einer erfindungsgemäßen Vorrichtung 8.

Die erfindungsgemäße Vorrichtung 8 zum Walzen eines Gewindes in einen Schraubenrohling 5weist zwei erfindungsgemäße Walzbacken 1 auf. Die eine Walzbacke 1 bleibt ortsfest, während die andere Walzbacke 1 beweglich ausgebildet ist und in Richtung der auf der Walzbacke 1 angedeuteten Pfeile beweglich ist.

Die Walzbacken 1 weisen auf ihrer Walzbackenoberfläche 6 eine Vielzahl an Nuten 2 auf. Weiterhin ist die Walzbackenoberfläche 6 strukturiert ausgebildet.

In diesem Ausführungsbeispiel weist die Vorrichtung 8 zwei Walzbacken 1 auf, welche eine Vielzahl an Nuten 2 aufweist, die parallel zueinander angeordnet sind und die ein Gewinde in den Schraubenrohling 5 erzeugen. Die Nuten 2 erstrecken sich parallel zu einer Haupterstreckungsrichtung.

Die Walzbackenoberfläche 6 ist strukturiert worden, insbesondere durch eine Laserstrahlung. In der Ausführungsform weist die Walzbackenoberfläche 6 eine lederstrukturähnliche Oberfläche 7 auf.

Die lederstrukturähnliche Oberfläche 7 weist eine Vielzahl an Erhebungen und Vertiefungen auf, die nebeneinander angeordnet sind.

Die Funktionsweise der Vorrichtung 8 wird im Folgenden kurz beschrieben. Im Prinzip ist die Funktionsweise einer solchen Vorrichtung dem Fachmann bekannt.

Die dargestellte bewegliche Walzbacke wird in einem Leerhub nach hinten (im Bild nach links) gezogen und nimmt den von einem Einsatzschieber 4 vorgedrückten Rohling 5 mit nach vorn (im Bild nach rechts).

In einer Abrollbewegung zwischen der festen und der beweglichen Walzbacke 1 wird das Gewinde (nicht dargestellt) auf den Rohling 5 gewalzt. Das Eindringen der Walzbacke in den Rohling bewirkt, dass der verdrängte Werkstoff in die Werkzeugkontur geformt wird.

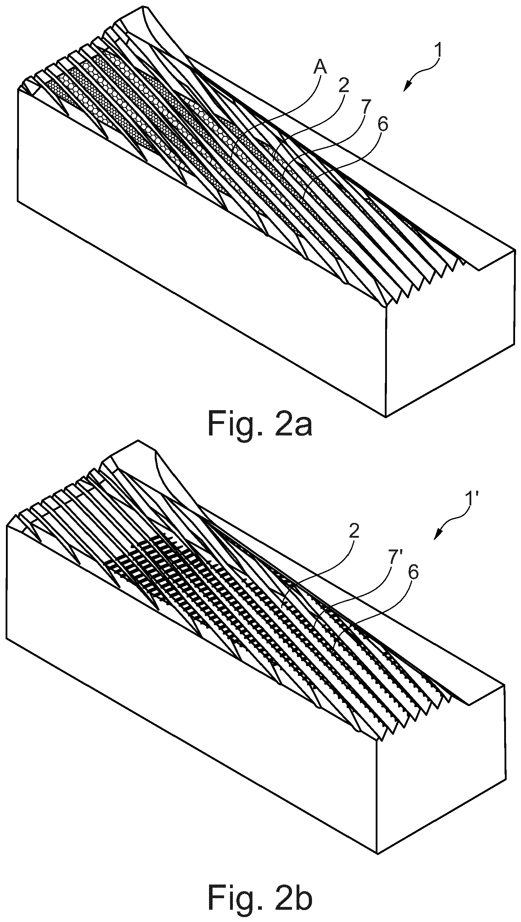

Figur 2a zeigt schematisch eine erste beispielhafte Ausführungsform einer erfindungsgemäßen Walzbacke 1. Die Walzbacke 1 weist eine Walzbackenoberfläche 6 auf. Die Walzbackenoberfläche 6 weist eine Vielzahl an Nuten 2 auf.

Die Nuten 2 sind parallel zueinander angeordnet und erzeugen ein Gewinde in einem Schraubenrohling. Die Nuten 2 erstrecken sich parallel zu einer Haupterstreckungsrichtung.

Erfindungsgemäß ist die Walzbackenoberfläche 6 strukturiert worden, insbesondere durch eine Laserstrahlung. In dieser Ausführungsform weist die Walzbackenoberfläche 6 eine lederstrukturähnliche Oberfläche 7 auf.

Die lederstrukturähnliche Oberfläche 7 weist eine Vielzahl an Erhebungen und Vertiefungen auf, die nebeneinander angeordnet sind.

Figur 2b zeigt schematisch eine zweite beispielhafte Ausführungsform einer erfindungsgemäßen Walzbacke 1'. Die Walzbackenoberfläche 6 weist eine Vielzahl an Nuten 2 auf, wobei zur Vermeidung von Wiederholungen auf die Ausführungen zur Figur 2a verwiesen wird.

In dieser Ausführungsform weist die Walzbackenoberfläche eine Stufenstruktur 7' auf.

Die Walzbackenoberfläche weist eine Vielzahl an stufenartigen Ausbildungen auf, die quer zwischen zwei benachbarten Nuten 2 verlaufen.

In dieser Ausführungsform nehmen die Abmessungen der Stufen im Verlauf ab und werden demnach kleiner.

Die Stufenstruktur wird beispielsweise durch einen Laser erzeugt.

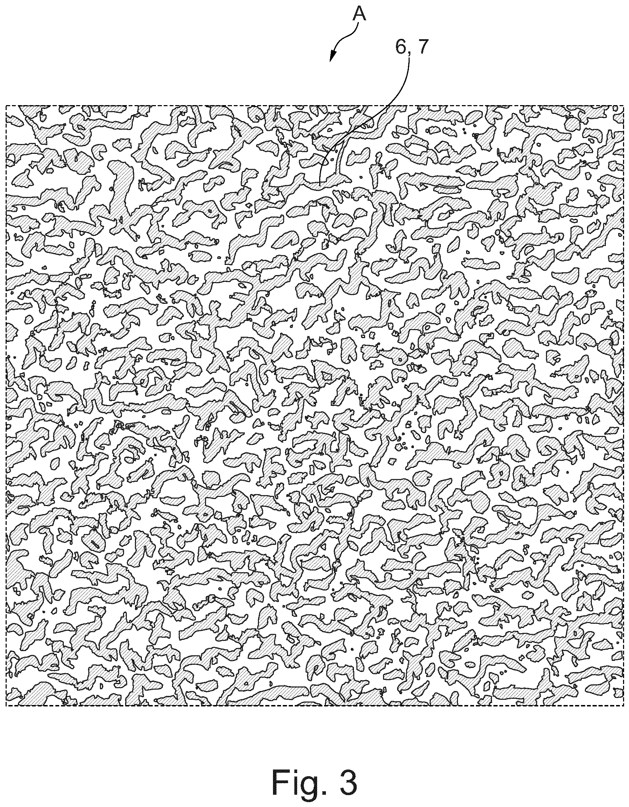

Figur 3 zeigt schematisch einen Ausschnitt A der Figur 2a in einer vergrößerten Darstellung. In dieser Ansicht wird die lederstrukturähnliche Oberfläche 7 der Walzbackenoberfläche 6 detailliert dargestellt. Man erkennt eine Vielzahl an nebeneinander angeordneten Erhebungen und Vertiefungen.

Die zuvor beschriebenen Ausführungsformen dienen lediglich der Illustration der Erfindung und schränken den grundsätzlichen Erfindungsgedanken in keiner Form ein.

### Bezugszeichenliste

- 1,1': Walzbacke
- 2: Nut
- 3: Zuführschiene
- 4: Einsatzschieber
- 5: Schraubenrohling
- 6: Walzbackenoberfläche
- 7,7': Struktur
- 8: Vorrichtung zum Walzen

## Patentansprüche

1. Verfahren zur Bearbeitung einer Walzbacke (1,1'), insbesondere eine Walzbacke (1,1') zum Walzen eines Gewindes in einen Schraubenrohling (5), aufweisend eine Walzbackenoberfläche (6) mit einer Vielzahl an Nuten (2), insbesondere zum Walzen des Gewindes, **dadurch gekennzeichnet, dass** die Walzbackenoberfläche (6) strukturiert wird.

2. Verfahren nach Anspruch 1, wobei die Walzbackenoberfläche (6) durch Laserstrahlung strukturiert wird.

3. Verfahren nach Anspruch 1, wobei die Walzbackenoberfläche (6) durch eine spanende Bearbeitung, insbesondere durch einen Fräser und/oder durch Schleifen, strukturiert wird.

4. Verfahren nach mindestens einem der vorhergehenden Ansprüche, wobei eine lederstrukturähnliche Oberfläche (7) erzeugt wird.

5. Verfahren nach mindestens einem der vorhergehenden Ansprüche, wobei eine Stufenstruktur (7') erzeugt wird.

6. Walzbacke (1,1'), bearbeitet mit einem Verfahren gemäß mindestens einem der vorhergehenden Ansprüche.

7. Vorrichtung (8) zum Walzen eines Gewindes in einen Schraubenrohling (5), aufweisend mindestens eine Walzbacke (1,1'), bearbeitet mit einem Verfahren gemäß mindestens einem der vorhergehenden Ansprüche.

8. Verfahren zum Walzen eines Gewindes in einen Schraubenrohling (5), wobei das Gewinde mit einer Vorrichtung gemäß dem vorhergehenden Anspruch gewalzt wird.

9. Schraube mit einem Gewinde, wobei das Gewinde mit einem Verfahren gemäß dem vorhergehenden Anspruch gewalzt wird.
